Europäisches Patentamt

European Patent Office

Office européen des brevets

(19)

(11) Numéro de publication : **0 113 618**
**B1**

# (12) FASCICULE DE BREVET EUROPÉEN

(45) Date de publication du fascicule du brevet :
08.07.87

(21) Numéro de dépôt : 83402398.8

(22) Date de dépôt : 13.12.83

(51) Int. Cl.⁴ : **C 04 B 5/02**, C 04 B 7/14,
**B 01 J 2/04**

(54) **Procédé de fabrication d'une matière pulvérulente utilisable pour l'obtention de liants hydrauliques et moyens pour la fabriquer.**

(30) Priorité : 13.12.82 FR 8220826

(43) Date de publication de la demande :
18.07.84 Bulletin 84/29

(45) Mention de la délivrance du brevet :
08.07.87 Bulletin 87/28

(84) Etats contractants désignés :
AT BE CH DE FR GB IT LI LU NL SE

(56) Documents cités :
EP-A- 0 040 283
DE-A- 2 211 682
US-A- 2 533 633
US-A- 3 469 961

(73) Titulaire : **IMPHY S.A.**
**168 rue de Rivoli**
**F-75001 Paris (FR)**

(72) Inventeur : **Courtault, Bernard**
**18 avenue Roland Garros**
**F-78140 Velizy (FR)**
Inventeur : **Raisson, Gérard**
**2 rue des Ratoires**
**F-58000 Nevers (FR)**

(74) Mandataire : **Phélip, Bruno et al**
**c/o Cabinet Harlé & Phélip 21, rue de la Rochefoucauld**
**F-75009 Paris (FR)**

## Description

La présente invention concerne une matière pulvérulente utilisable pour obtenir des liants hydrauliques et présentant des caractéristiques spécialement avantageuses pour être utilisées dans la fabrication et l'utilisation du ciment, et l'invention a pour objet un procédé et des dispositifs qui permettent de fabriquer cette matière à partir d'un laitier de composition convenable, ayant une viscosité suffisamment faible, tel qu'un laitier de haut fourneau par exemple, ou encore un laitier d'aciérie dont on ajuste éventuellement la viscosité et la composition.

Cette matière pulvérulente peut être utilisée soit comme addition aux matières brutes enfournées dans un four de cimenterie, soit directement comme constituant de liants hydrauliques, après mélange ou non avec quelques adjuvants. Ses larges possibilités d'application sont dues à ce qu'elle se présente à la fois très sèche et avec une fine granulométrie, améliorée ou non par un broyage préalable, sans aucune calcination préalable, tout en ayant une composition chimique appropriée et un état physique vitrifié.

La présente invention se situe dans l'industrie du ciment, dans le cadre de l'emploi de laitier, par exemple en provenance d'un haut fourneau, ou de tout autre récipient métallurgique producteur de laitier, tel qu'un convertisseur ou un four électrique ; elle est également concevable et applicable à partir d'un lit fondu synthétique.

Dans le cas du laitier de haut fourneau par exemple, on sait que, à la sortie du haut fourneau, ce laitier est habituellement granulé par pulvérisation d'eau, et que l'on recueille ainsi un granulat vitrifié humide présentant une proportion d'humidité de l'ordre de 12 % à 15 %, et une texture telle que sa densité en vrac est de l'ordre de 1, soit 30 % seulement de la densité réelle du laitier ; ce granulat, après séchage et désagglomération, présente une granulométrie relativement grossière, telle que par exemple :

100 % des grains inférieurs à 5 mm - 50 % des grains inférieurs à 700 micromètres - 5 % à 10 % des grains inférieurs à 100 micromètres.

Un tel produit présente quatre inconvénients importants pour son emploi comme constituant de ciment ou comme matière première de four de cimenterie :

1. Il est très humide, et va donc nécessiter une opération de séchage et une dépense de calories pour le sécher, au moins partiellement ;

2. Sa granulométrie est grossière, donc le rapport moyen : surface/volume des grains est relativement faible, ce qui nuit à sa réactivité ; il faut donc le broyer, ce qui n'est pas gratuit.

3. Le traitement à l'eau entraîne souvent une diminution de réactivité.

4. Ce mode de granulation à l'eau fait perdre toute possibilité de récupération de la chaleur sensible du laitier.

5. Il existe des risques de prise en masse de ce laitier granulé par suite de son humidité, lors des stockages de longue durée.

De plus, comme cette granulation du laitier exige de fortes quantités d'eau, jusqu'à 16 mètres cubes par tonne de laitier, on utilise, dans les usines sidérurgiques côtières, de l'eau de mer, qui introduit les deux inconvénients supplémentaires suivants :

6. Introduction d'ions chlorés dans le laitier granulé.

7. Corrosion des installations de granulation, de manutention et de stockage.

Devant tous ces inconvénients des produits obtenus par granulation à l'eau, à partir de laitiers métallurgiques, on a déjà tenté de développer des procédés de granulation à sec, par exemple par impact d'un jet de laitier sur un tambour tournant muni d'une denture, éventuellement avec un peu d'eau d'arrosage sur le tambour denté. De cette manière, on a effectivement obtenu un granulat sec, mais qui présente une granulométrie très grossière, pouvant aller jusqu'à des morceaux de 15 millimètres. Ce n'est donc pas satisfaisant pour son application au ciment.

Le but de la présente invention est de fournir à l'industrie du ciment, sans séchage, un produit sec et pulvérulent, à fine granulométrie et à forte réactivité, ne présentant pas les inconvénients mentionnés ci-dessus bien qu'il soit obtenu à partir de laitiers, métallurgiques ou synthétiques.

Pour fabriquer de tels produits à partir d'un laitier de haut fourneau, il a déjà été proposé un procédé consistant à combiner une coulée du laitier en jet, une pulvérisation gazeuse du jet de laitier en gouttelettes par projection d'au moins un jet de gaz sur le jet de laitier coulé, et une trempe rapide des gouttelettes ainsi pulvérisées. Un procédé de ce type a déjà été mis en œuvre dans une enceinte fermée, verticale et cylindroconique, qui présente une ouverture de coulée en jet du laitier en provenance d'un récipient, tel qu'un panier, alimenté par une poche de coulée, la partie inférieure de l'enceinte étant conformée en entonnoir conique présentant un passage d'extraction du produit pulvérulent. Ce dispositif comprend également des moyens de pulvérisation du jet de laitier en gouttelettes, ces moyens comprenant au moins un injecteur de gaz dirigé vers l'axe du jet de laitier entrant dans l'enceinte par l'ouverture de coulée. Ce dispositif connu comprend enfin des moyens de trempe des gouttelettes par introduction d'un fluide froid dans l'enceinte.

Un procédé et un dispositif de ce type sont notamment décrits dans le brevet US-3 469 961, dans lequel, d'une part, le gaz de pulvérisation est de la vapeur d'eau projetée par au moins un injecteur dirigé obliquement, de bas en haut, et selon le grand axe de la section oblongue ou elliptique du jet de laitier, vers une partie inclinée de ce jet de laitier qui pénètre dans l'enceinte par une ouverture de coulée ménagée dans la paroi latérale de l'enceinte, et dans lequel, d'autre part, la trempe est assurée par des jets d'eau, dont chacun est adjacent à un jet de vapeur et vient frapper le jet de laitier au même point que le jet de vapeur correspondant. Cette réalisation connue ne permet pas de produire directement, sans criblage, un produit pulvérulent particulier et avantageux tel que défini ci-dessous.

Au contraire, la présente invention a pour but de fournir ce produit présentant des propriétés hydrauliques, utilisable pour la fabrication de liants hydrauliques, et obtenu à partir d'un laitier industriel ou synthétique dont les constituants principaux sont la chaux, la silice et l'alumine, de viscosité au plus égale à 20 poises, et tel qu'il se présente sous la forme d'une matière pulvérulente à grains vitrifiés ayant les propriétés suivantes :

a) Tous les grains sont secs, c'est-à-dire que la masse pulvérulente contient moins de 5 % d'humidité.

b) La granulométrie de cette matière pulvérulente est très fine, c'est-à-dire que 100 % des grains sont inférieurs à 2 millimètres, et la granulométrie moyenne est comprise entre 50 et 400 micromètres.

c) La densité apparente de la masse pulvérulente est comprise entre 40 % et 65 % de la densité réelle du liquide dont elle est issue.

L'invention a pour objet les moyens appropriés pour obtenir le produit mentionné ci-dessus, de sorte que ce produit soit utilisable sans criblage.

A cet effet, l'invention a pour objet l'application à la fabrication du produit mentionné ci-dessus d'un procédé du type présenté ci-dessus et qui se caractérise en ce que le jet de liquide est coulé verticalement, et la pulvérisation gazeuse est assurée en dirigeant sensiblement vers un même point de l'axe du jet de liquide plusieurs jets de gaz provenant de plusieurs injecteurs de gaz régulièrement répartis autour du jet de liquide et débitant tous obliquement de haut en bas.

Dans ce mémoire, il faut entendre par « composition convenable pour l'obtention de propriétés hydrauliques », des compositions se situant sensiblement dans la zone des ciments Portland, dans celle des ciments alumineux et dans celle des laitiers basiques sidérurgiques.

L'agent gazeux le plus usuel pour la pulvérisation est l'air comprimé. Mais on peut aussi utiliser un autre gaz, tel que de la vapeur sèche par exemple.

Le liquide constitué d'oxydes peut être un laitier de haut fourneau. En effet, la plupart des laitiers de haut fourneau ont une viscosité inférieure à 20 poises et une composition convenable pour leur utilisation dans la fabrication des ciments.

Ledit liquide peut éventuellement être un laitier d'aciérie, soit de convertisseur, soit de four électrique, mais il peut alors être nécessaire dans certains cas d'ajuster sa viscosité par certaines additions.

Ledit liquide peut éventuellement être constitué de mélanges synthétiques, par exemple un mélange de roches basiques fondues dans un four industriel, et dont la composition est choisie de manière à bien s'adapter à la fabrication des ciments, tout en présentant une viscosité suffisamment faible à la température de pulvérisation.

La présente invention a aussi pour objet un dispositif de pulvérisation gazeuse et de trempe rapide, du type présenté ci-dessus, et appliquant le procédé mentionné ci-dessus aux liquides de viscosité inférieure à 2 Pa · s (20 poises), en vue de fabriquer le produit particulier défini ci-dessus.

Le dispositif selon l'invention se caractérise en ce que l'ouverture de coulée est pratiquée dans la partie supérieure de l'enceinte, pour la coulée du liquide en jet vertical, et en ce que les moyens de pulvérisation comprennent un premier anneau creux, monté autour du jet de liquide et aménagé en rampe de pulvérisation alimentée en gaz sous pression et percée de plusieurs ouvertures formant des injecteurs qui sont régulièrement répartis autour du jet de liquide et tous dirigés obliquement. de haut en bas et vers un même point de l'axe du jet de liquide, afin de pulvériser ce dernier en gouttelettes.

Avantageusement, l'enceinte présente également, dans son tiers supérieur, au moins une ouverture d'évacuation du gaz de pulvérisation chargé de poussière vers un dépoussiéreur cyclone, dont la base est en communication avec l'enceinte par une conduite de réinjection des poussières collectées dans le dépoussiéreur cyclone correspondant, et qui débouche par un orifice de réinjection dans la base de la partie cylindrique de l'enceinte, l'un au moins des dépoussiéreurs cyclones étant également en communication par une conduite avec un dépoussiéreur secondaire qui débouche lui-même à l'air libre pour l'évacuation du gaz dépoussiéré. De la sorte, la poussière séparée du gaz de pulvérisation est introduite à la base de l'enceinte, pour être extraite par un extracteur en même temps que la poudre tombée directement dans l'enceinte par gravité. Le réglage du dispositif est avantageusement tel que la poudre est extraite à une température supérieure à 100 °C.

Ce dispositif peut être réalisé selon deux variantes. Dans la première variante, la chaleur sensible du laitier métallurgique ou de son équivalent n'est pas récupérée. Dans la seconde variante, cette chaleur sensible est récupérée en majeure partie.

La première variante de dispositif de fabrication du produit pulvérulent, pour laquelle le fluide de trempe des gouttelettes est de l'eau injectée dans l'enceinte, est telle que les moyens de trempe comprennent un second anneau creux, aménagé en rampe de pulvérisation d'eau, et qui est disposé à distance au-dessous du premier anneau de pulvérisation au gaz, et entoure le jet de gouttelettes formé par ce premier anneau. Le débit de l'eau utilisée comme liquide de trempe, est réglé de façon à ce que le courant gazeux se refroidisse jusqu'à une température évitant la condensation et à ce que les grains de laitier se refroidissent jusqu'à une température permettant leur manipulation.

La deuxième variante de dispositif de fabrication du produit pulvérulent, avec récupération de la majeure partie de la chaleur sensible du laitier, et pour laquelle le fluide de trempe des gouttelettes est un gaz introduit dans l'enceinte, est telle que les moyens de trempe comprennent des moyens de prélèvement dans l'enceinte et de dépoussiérage d'une certaine quantité du gaz de pulvérisation, et des moyens de recyclage de la quantité de gaz dépoussiéré par réinjection de cette quantité dans la base de la partie cylindrique de l'enceinte. Dans ce cas, l'anneau de pulvérisation d'eau de refroidissement n'existe pas, et les moyens de prélèvement et de dépoussiérage comprennent plusieurs ouvertures d'évacuation du gaz de pulvérisation chargé de poussière, dont chacune alimente un dépoussiéreur cyclone par l'intermédiaire d'un échangeur de chaleur, qui abaisse la température des gaz autour de 150 °C les moyens de recyclage comprennent au moins une conduite de recyclage reliant la base de la partie cylindrique de l'enceinte à un dépoussiéreur cyclone qui ne communique pas avec un dépoussiéreur secondaire, afin de réintroduire dans l'enceinte le gaz qui a été préalablement dépoussiéré dans ce dépoussiéreur cyclone.

Dans tous les cas, il est avantageux que le dispositif soit réglé de façon à ce que le produit pulvérulent soit extrait par le passage d'extraction, par exemple à l'aide d'un extracteur étanche, et à une température supérieure à 100 °C.

Les figures et les commentaires illustrant les exemples décrits ci-après feront bien comprendre les détails de ces deux variantes de dispositifs.

Auparavant, il est nécessaire de bien situer l'invention, qui réside dans ces dispositifs considérés en eux-mêmes et dans l'application d'un procédé et de ces dispositifs pour obtenir le produit défini ci-dessus.

Les avantages du produit obtenu et utilisé soit comme addition aux matières premières dans les fours de cimenterie soit comme élément de constitution de liants hydrauliques, avec ou sans addition de quelques adjuvants, sont les suivants :

1. La poudre constituant ce produit est très sèche. Son taux d'humidité est inférieur à 5 % en poids. Il en résulte d'abord qu'elle est aisément manipulable et que son stockage, même de longue durée, n'entraîne aucune prise en masse. Ensuite, si on l'enfourne dans un four de cimenterie, le bilan thermique et la consommation de combustible du four se trouvent très améliorés par rapport au bilan thermique obtenu si l'on enfourne le même débit de laitier granulé à l'eau.

2. La poudre constituant ce produit est très fine, beaucoup plus fine que le granulat d'un laitier granulé à l'eau, et son état de surface présente une réactivité plus grande. De plus, on sait qu'une certaine proportion de farine extrêmement fine est nécessaire pour qu'un ciment puisse assurer à un béton les qualités essentielles de plasticité, d'imperméabilité et de bonne résistance mécanique.

3. Dans la variante avec récupération de chaleur, la majeure partie de la chaleur sensible du laitier, qui peut aller jusqu'à 80 %, est récupérée, ce qui n'est pas possible dans la granulation à l'eau.

4. Même en l'absence d'un dispositif de récupération de chaleur à côté du dispositif de pulvérisation, la poudre recueillie à la base de l'enceinte du dispositif de pulvérisation, lorsqu'elle est utilisée en addition aux matières brutes, peut servir au séchage de celles-ci.

On va maintenant décrire, à titre d'exemples non limitatifs, deux modes de réalisation de dispositifs fabriquant le produit selon l'invention, l'un sans, et l'autre avec récupération de la majeure partie de la chaleur sensible du laitier coulé.

La figure 1 est une coupe verticale d'un dispositif selon la première variante.

Les figures 2 et 3 se rapportent à un dispositif selon la deuxième variante : la figure 2 est une coupe verticale d'un tel dispositif, et la figure 3 représente la configuration schématique en plan de ce dernier dispositif.

Premier mode — Sans récupération de chaleur.

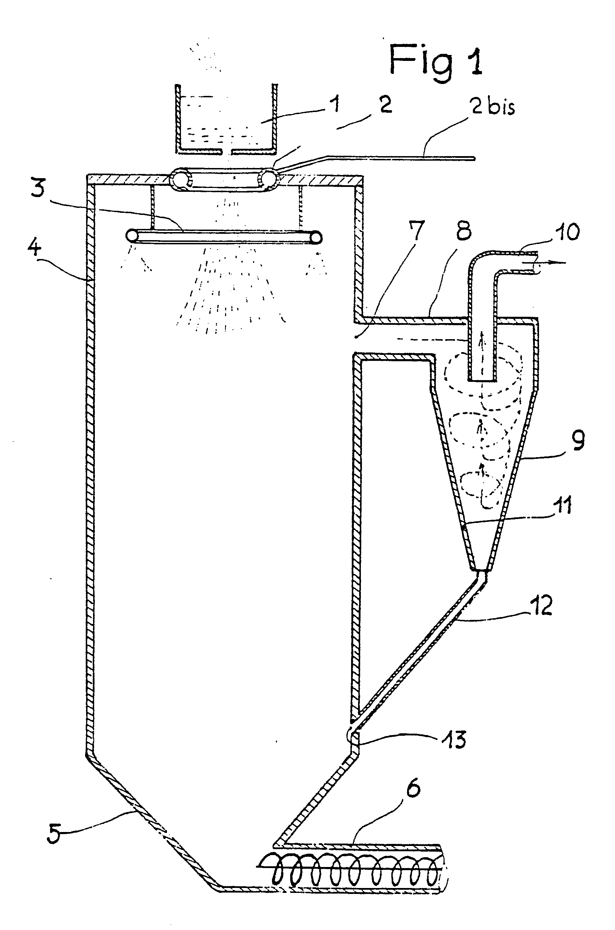

Sur la figure 1, on voit un panier 1 alimenté en laitier de haut fourneau par une poche ou par un chenal (non représenté sur la figure) et coulant verticalement son laitier à l'intérieur de l'anneau 2 de pulvérisation d'air comprimé, lequel arrive par la conduite 2 bis.

Le débit de laitier est de 30 tonnes à l'heure.

Le diamètre du panier de la poche de laitier est de 40 millimètres.

Le diamètre intérieur de l'anneau 2 est de 80 millimètres.

L'anneau 2 comporte six injecteurs d'air comprimé de diamètre 8,3 millimètres, régulièrement répartis sur la circonférence, et débitant tous obliquement, de haut en bas et en direction du même point de l'axe du jet de coulée du laitier, en formant un angle de 13° avec le plan horizontal, de l'air comprimé, sous une pression de 1 500 000 Pascals, à raison de 3 300 Nm$^3$/heure pour les six injecteurs. Ces six jets d'air comprimé font éclater en de multiples gouttelettes le jet vertical de laitier en provenance du panier 1.

Au-dessous de l'anneau 2 de pulvérisation à l'air est disposé, à environ 30 centimètres de distance, un anneau 3 de diamètre intérieur de l'ordre d'un mètre, constituant une rampe de pulvérisation d'eau, le débit d'eau étant réglé à 460 grammes d'eau par kilogramme de laitier à refroidir, soit 13,8 tonnes d'eau à l'heure, ce qui constitue le bon réglage à la fois pour assurer une trempe rapide des gouttelettes descendant par gravité, et pour récupérer une poudre complètement sèche à une température comprise entre 150° et 200° C, à la sortie du dispositif.

Les deux anneaux 2 et 3 sont disposés autour de l'axe et à la partie supérieure d'une enceinte fermée 4 (ouverte seulement en haut pour l'admission de laitier liquide dans l'anneau 2, en bas pour l'extraction de la poudre sèche, et sur un côté pour l'évacuation de l'air soufflé), cylindrique et verticale, de 5 mètres de hauteur et 2 mètres de diamètre, et se terminant à sa base par un entonnoir 5 de 1,50 mètre de hauteur, qui recueille la poudre sèche, à la température de 150°-200 °C. Celle-ci est évacuée par un extracteur à vis 6 horizontal.

Pour l'évacuation de l'air soufflé, l'enceinte 4 possède une ouverture 7 de 200 millimètres de diamètre disposée à 1,20 mètre de la partie supérieure de l'enceinte, et qui donne sur une conduite 8. Celle-ci alimente en air chargé de poussières et à environ 150 °C un dépoussiéreur cyclone 9 capable de recevoir 5 000 Nm³ d'air à l'heure et de les dépoussiérer. L'air ainsi dépoussiéré est alors dirigé par la conduite 10 vers un dépoussiéreur secondaire non représenté sur la figure 1, puis il est évacué à l'air libre, afin d'éviter toute surpression excessive dans l'enceinte 4, tandis que les poussières récupérées à la base 11 du dépoussiéreur cyclone 9 sont réinjectées par la conduite 12, en 13, à la partie inférieure de l'enceinte 4.

Dans ce dispositif sans récupération de chaleur, un seul dépoussiereur cyclone 9 suffit en pratique.

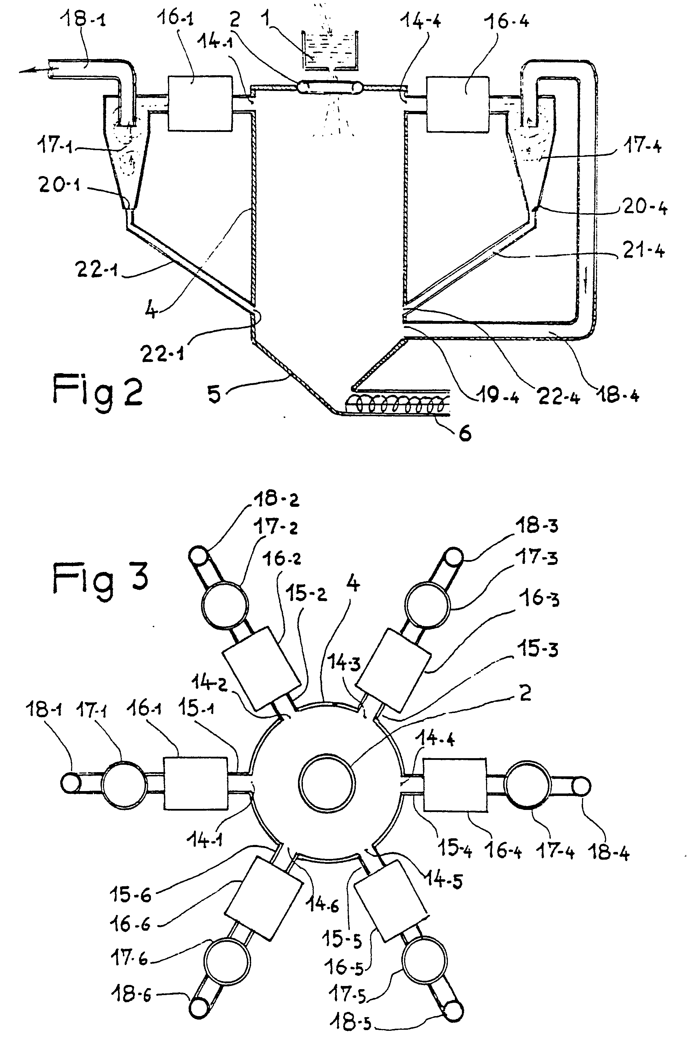

Deuxième mode — Avec récupération de chaleur. (Figures 2 et 3).

Comme précédemment le panier 1 de laitier coule 30 tonnes de laitier à l'heure dans l'anneau 2 de pulvérisation à l'air disposé à la partie supérieure de l'enceinte 4, dont le diamètre est alors de 2,50 mètres, la hauteur de la partie cylindrique restant égale à 5 mètres, et la base de l'enceinte constituant toujours un entonnoir 5 muni d'un extracteur 6.

Mais ici, l'anneau 3 de pulvérisation d'eau de refroidissement n'existe pas. En revanche, il existe dans la partie supérieure de l'enceinte 4, à environ 40 centimètres de sa face supérieure, six orifices à 60° l'un de l'autre, tels que 14, chacun d'un diamètre de 200 millimètres et donnant sur une conduite telle que 15, qui débouche dans l'un des six échangeurs de chaleur 16-1 à 16-6. L'air chargé de poussières, et à 600 °C environ, se répartit entre ces six échangeurs 16, et en ressort à 150 °C environ ; il alimente alors chacun des six dépoussiéreurs cyclones 17-1 à 17-6 capables de recevoir chacun 6 000 Nm³ d'air à l'heure et de les dépoussiérer. Pour l'un seulement 17-1 de ces six dépoussiéreurs, l'air dépoussiéré en majeure partie est dirigé par la conduite 18-1 sur un dépoussiéreur secondaire non représenté sur les figures 2 et 3, puis il est évacué à l'air libre, afin d'éviter toute surpression excessive dans l'enceinte 14.

Pour chacun des cinq autres dépoussiéreurs 17-2 à 17-6, l'air dépoussiéré en majeure partie est recyclé à la base de l'enceinte 4 par une conduite telle que 18, en 19, et vient ainsi contribuer efficacement à la trempe rapide des gouttelettes et des grains contenus dans l'enceinte 4.

Pour les six dépoussiéreurs 17-1 à 17-6, les poussières récupérées à leur base 20-1 à 20-6 sont réinjectées par les conduites 21-1 à 21-6, par les six orifices 22-1 à 22-6, dans la partie inférieure du cylindre de l'enceinte 4. Elles se mélangent aux poussières déjà contenues dans cette enceinte et qui descendent par gravité. L'ensemble de cette poudre est entraînée à la base de l'entonnoir 5 par l'extracteur à vis 6.

En ce qui concerne le produit selon l'invention, on va décrire ci-après un exemple d'utilisation directe de ce produit pour constituer un ciment de caractéristiques déterminées, le ciment de laitier au clinker, dit « ciment CLK » selon les normalisations française et européenne.

Dans cet exemple, on part d'un laitier de haut fourneau présentant la composition suivante :
$SiO_2 = 34$ % — $Al_2O_3 = 11$ % — $CaO = 39$ % — $MgO = 8$ % — Divers = 8 %.

On pulvérise ce laitier à l'air comprimé selon l'invention. Puis, on effectue le mélange suivant :
85 % de ce laitier granulé selon l'invention
10 % de clinker
5 % de gypse
et l'on obtient un excellent ciment CLK.

Il est bien entendu que l'on peut, sans sortir du cadre du produit, du procédé et des dispositifs selon l'invention, imaginer des variantes et des perfectionnements de détails, de même qu'envisager l'emploi de moyens équivalents.

**Revendications**

1. Procédé de fabrication d'un produit présentant des propriétés hydrauliques, utilisable pour la fabrication de liants hydrauliques, et se présentant sous la forme d'une matière pulvérulente à grains vitrifiés ayant les propriétés suivantes :

a) un taux d'humidité inférieur à 5 %,
b) une granulométrie telle que 100 % des grains sont inférieurs à 2 millimètres, et la granulométrie moyenne est comprise entre 50 et 400 micromètres,
c) une densité apparente de la masse pulvérulente comprise entre 40 % et 65 % de la densité réelle d'un liquide tel qu'un laitier dont elle est issue,

le produit étant obtenu à partir d'un liquide principalement constitué d'oxydes à base de chaux, d'alumine et de silice, de viscosité au plus égale à 2 Pa · s (20 poises) et de composition convenable pour l'obtention de propriétés hydrauliques, par la combinaison d'une coulée dudit liquide en jet, d'une pulvérisation gazeuse dudit jet de liquide en gouttelettes par projection d'au moins un jet de gaz sur ledit jet de liquide coulé, et d'une trempe rapide des gouttelettes ainsi pulvérisées, caractérisé en ce que ledit jet de liquide est coulé verticalement et que ladite pulvérisation gazeuse est assurée en dirigeant sensiblement vers un même point de l'axe du jet de liquide plusieurs jets de gaz provenant de plusieurs injecteurs de gaz régulièrement répartis autour du jet de liquide et débitant tous obliquement de haut en bas.

2. Procédé selon la revendication 1, caractérisé en ce que le liquide constitué d'oxydes est un laitier de haut fourneau de viscosité inférieure à 20 poises.

3. Procédé selon la revendication 1, caractérisé en ce que le liquide constitué d'oxydes est un laitier d'aciérie, ajusté par des additions appropriées pour que sa viscosité soit inférieure à 20 poises et pour que sa composition soit convenable pour l'obtention de propriétés hydrauliques.

4. Procédé selon la revendication 1, caractérisé en ce que le liquide constitué d'oxydes est formé par des roches basiques fondues dans un four industriel et choisies de telle manière que la viscosité du liquide soit inférieure à 20 poises et que sa composition soit convenable pour l'obtention de propriétés hydrauliques.

5. Dispositif de mise en œuvre du procédé selon l'une des revendications 1 à 4, comprenant :

une enceinte fermée, verticale et cylindroconique (4, 5) qui présente une ouverture de coulée en jet du liquide en provenance d'un panier (1) alimenté par un chenal ou une poche de coulée, la partie inférieure (5) de l'enceinte étant conformée en entonnoir conique présentant un passage d'extraction du produit pulvérulent,

des moyens de pulvérisation du jet de liquide en gouttelettes, qui comprennent au moins un injecteur de gaz dirigé vers l'axe du jet de liquide entrant dans l'enceinte (4, 5) par l'ouverture de coulée,

des moyens (3 ; 18, 19) de trempe rapide des gouttelettes par introduction d'un fluide froid dans l'enceinte (4, 5), caractérisé en ce que :

l'ouverture de coulée est pratiquée dans la partie supérieure de l'enceinte (4, 5) pour la coulée du liquide en jet vertical, et

les moyens de pulvérisation comprennent un premier anneau creux (2) monté autour du jet de liquide et aménagé en rampe de pulvérisation alimentée en gaz sous pression et percée de plusieurs ouvertures formant des injecteurs qui sont régulièrement répartis autour du jet de liquide et tous dirigés obliquement de haut en bas et vers un même point de l'axe du jet de liquide, afin de pulvériser ce dernier en gouttelettes.

6. Dispositif selon la revendication 5, caractérisé en ce que l'enceinte (4, 5) présente également, dans son tiers supérieur, au moins une ouverture (7, 14) d'évacuation du gaz de pulvérisation chargé de poussière vers un dépoussiéreur cyclone (9, 17) dont la base (11, 20) est en communication avec l'enceinte (4, 5) par une conduite (12, 21) de réinjection des poussières collectées dans le dépoussiéreur cyclone (9, 17) et qui débouche par un orifice de réinjection (13, 22) dans la base de la partie cylindrique (4) de l'enceinte, l'un au moins des dépoussiéreurs cyclones (9, 17) étant également en communication par une conduite (10 ; 18-1) avec un dépoussiéreur secondaire qui débouche lui-même à l'air libre pour l'évacuation du gaz dépoussiéré.

7. Dispositif selon l'une des revendications 5 et 6, pour lequel le fluide de trempe des gouttelettes est de l'eau injectée dans l'enceinte (4, 5), caractérisée en ce que lesdits moyens de trempe comprennent un second anneau creux (3), aménagé en rampe de pulvérisation d'eau et qui est disposé à distance au-dessous du premier anneau (2) de pulvérisation au gaz et entoure le jet de gouttelettes formé par le premier anneau.

8. Dispositif selon l'une des revendications 5 et 6, pour lequel le fluide de trempe des gouttelettes est un gaz introduit dans l'enceinte (4, 5) caractérisé en ce que lesdits moyens de trempe comprennent des moyens (14, 16, 19) de prélèvement dans l'enceinte (4, 5) et de dépoussiérage d'une certaine quantité du gaz de pulvérisation, et des moyens (18, 19) de recyclage de la quantité de gaz dépoussiéré par réinjection de cette quantité dans la base de la partie cylindrique (4) de l'enceinte.

9. Dispositif selon la revendication 8, telle que rattachée à la revendication 6, caractérisé en ce que lesdits moyens de prélèvement et de dépoussiérage comprennent plusieurs ouvertures (14) d'évacuation du gaz de pulvérisation chargé de poussière, dont chacune alimente un dépoussiéreur cyclone (17) par l'intermédiaire d'un échangeur de chaleur (16), et lesdits moyens de recyclage comprennent au moins une conduite de recyclage (18-4) reliant la base de la partie cylindrique (4) de l'enceinte à un dépoussiéreur cyclone (17-4) qui ne communique pas avec un dépoussiéreur secondaire, afin de réintroduire dans l'enceinte (4, 5) le gaz qui a été dépoussiéré dans ce dépoussiéreur cyclone (17-4).

10. Dispositif selon l'une des revendications 5 à 9, caractérisé en ce qu'il est réglé de façon à ce que le produit pulvérulent soit extrait par le passage d'extraction à l'aide d'un extracteur étanche (6) et à une température supérieure à 100 °C.

## Claims

1. Process for the production of a product having hydraulic properties, which is utilizable for the production of hydraulic binders and which is in the form of a pulverulent material comprising vitrified particles having the following properties :

a) a degree of moisture lower than 5 %;

b) a particle size such that 100 % of the particles are smaller than 2 millimetres, the mean particle size being between 50 and 400 micrometres ;

c) an apparent density of the pulverulent mass between 40 % and 65 % of the real density of a liquid, such as a slag, from which it was obtained,

the product being obtained from a liquid consisting principally of oxides based on lime, alumina, and silica, having a viscosity at most equal to 2 Pa · s (20 poises) and a composition suitable for obtaining hydraulic properties, by the combination of the pouring of a jet of said liquid, the gaseous atomization of said jet of liquid into droplets by spraying at least one jet of gas onto said poured jet of liquid, and the rapid quenching of the droplets atomized in this manner, characterized in that said jet of liquid is poured vertically and that said gaseous atomization is effected by directing substantially towards one and the same point on the axis of the jet of liquid a plurality of jets of gas coming from a plurality of gas injectors regularly distributed around the jet of liquid, all of said injectors delivering obliquely downwards.

2. Process according to Claim 1, characterized in that the liquid consisting of oxides is a blast furnace slag of a viscosity lower than 20 poises.

3. Process according to claim 1, characterized in that the liquid consisting of oxides is a steel-works slag adjusted by appropriate additions to have a viscosity lower than 20 poises and to have a composition suitable for obtaining hydraulic properties.

4. Process according to Claim 1, characterized in that the liquid consisting of oxides is formed by basic rocks melted in an industrial furnace and selected to ensure that the viscosity of the liquid will be lower than 20 poises and that its composition will be suitable for obtaining hydraulic properties.

5. Apparatus for applying the process according to one of Claims 1 to 4, comprising :

a closed vertical cylindroconical vessel (4, 5) having an opening for pouring a jet of the liquid coming from a tundish (1) fed by a pouring spout or ladle, the bottom part (5) of the vessel being in the form of a conical funnel having a passage for the extraction of the pulverulent product,

means for the atomization of the jet of liquid into droplets, said means comprising at least one gas injector directed towards the axis of the jet of liquid entering the vessel (4, 5) through the pouring opening,

means (3 ; 18, 19) for the rapid quenching of the droplets by the introduction of a cold fluid into the vessel (4, 5), characterized in that :

the pouring opening is formed in the top part of the vessel (4, 5) for pouring the liquid in a vertical jet, and

the atomization means consist of a first hollow ring (2) mounted around the jet of liquid and arranged as a spray distributor fed with pressurized gas and being provided with a plurality of openings forming injectors which are distributed regularly around the jet of liquid and all of which are directed obliquely downwards and towards one and the same point on that axis of the jet of liquid for the purpose of atomizing the latter into droplets.

6. Apparatus according to Claim 5, characterized in that the vessel (4, 5) also has in its upper third at least one opening (7, 14) for the evacuation of the atomization gas charged with dust towards a cyclone dust separator (9, 17) whose base (11, 20) is in communication with the vessel (4, 5) by way of a pipe (12, 21) which reinjects the dust collected in the cyclone dust separator (9, 17) and which discharges through a reinjection aperture (13, 22) into the bottom of the cylindrical portion (4) of the vessel, at least one of the cyclone dust separators (9, 17) also being in communication via a pipe (10 ; 18-1) with a secondary dust separator which in turn leads out into the atmosphere for the discharge of the gas freed from dust.

7. Apparatus according to one of Claims 5 and 6, for which the quenching fluid for the droplets is water injected into the vessel (4, 5), characterized in that said quenching means comprise a second hollow ring (3) arranged as a water spray distributor and disposed at a distance below the first gas atomization ring (2), surrounding the jet of droplets formed by the first ring.

8. Apparatus according to one of Claims 5 and 6, for which the quenching fluid for the droplets is a gas introduced into the vessel (4, 5), characterized in that said quenching means comprise means (14, 16, 19) for taking from the vessel (4, 5) a certain amount of the atomization gas and extracting the dust from it, and means (18, 19) for recycling the amount of gas which has been freed from dust, by reinjecting it into the bottom of the cylindrical portion (4) of the vessel.

9. Apparatus according to claim 8 in its association with Claim 6, characterized in that the means for taking out gas and freeing it from dust comprise a plurality of openings (14) for the discharge of the atomization gas charged with dust, each of them feeding a cyclone dust separator (17) by way of a heat exchanger (16), while the recycling means comprise at least one recycling pipe (18-4) connecting the bottom of the cylindrical portion (4) of the vessel to a cyclone dust separator (17-4) which is not in communication with a secondary dust separator, in order to reintroduce into the vessel (4, 5) the gas which has been freed of dust in said cyclone dust separator (17-4).

10. Apparatus according to one of Claims 5 to 9, characterized in that it is controlled in such a manner that the pulverulent product is extracted through the extraction passage with the aid of a fluidtight extractor (6) and at a temperature above 100°.

**Patentansprüche**

1. Verfahren zur Herstellung eines Erzeugnisses mit hydraulischen Eigenschaften, verwendbar für die Fabrikation hydraulischer Bindemittel und in Form eines Pulvers aus glasigen Körnern mit folgenden Eigenschaften :

a) ein Feuchtigkeitsgehalt kleiner als 5 %,

b) eine Körnung, bei der 100 % der Körner kleiner als 2 mm sind und bei der die mittlere Körnung zwischen 50 und 400 μm liegt,

c) eine scheinbare Dichte der pulverförmigen Masse, die zwischen 40 % und 60 % der Dichte einer Flüssigkeit wie einer Schlacke beträgt, aus der sie hervorgegangen ist,

wobei das Erzeugnis aus einer im wesentlichen aus Oxyden auf der Basis von Kalk, Aluminium und Silizium bestehenden Flüssigkeit einer Viskosität von höchstens 2 Pa · s und einer geeigneten Zusammensetzung, um hydraulische Eigenschaften zu erzielen, durch die Kombination eines Stroms dieser Flüssigkeit als Strahl, einer Gas-Zerteilung des Flüssigkeitsstrahls in Tröpfchen durch Leiten wenigstens eines Gasstrahls auf den Flüssigkeitsstrom und durch schnelles Abschrecken der so zerteilten Tröpfchen erhalten wird, dadurch gekennzeichnet, daß der Flüssigkeitsstrahl vertikal strömt und daß die Gas-Zerteilung dadurch erhalten wird, daß auf ein gleiches Punkt des Flüssigkeitsstrahls mehrere Gasstrahlen gerichtet sind, die von mehreren, regelmäßig um den Flüssigkeitsstrahl angeordneten, sämtlich schräg von oben nach unten abgebenden Gasinjektoren ausgehen.

2. Verfahren nach Anspruch 1, dadurch gekennzeichnet, daß die aus Oxyden gebildete Flüssigkeit eine Hochofenschlacke ist, deren Viskosität kleiner als 2 Pa · s ist.

3. Verfahren nach Anspruch 1, dadurch gekennzeichnet, daß die aus Oxyden gebildete Flüssigkeit eine Stahlschlacke ist, die durch geeignete Zusätze auf eine Viskosität kleiner als 2 Pa · s sowie derart eingestellt ist, daß ihre Zusammensetzung zum Erhalt hydraulischer Eigenschaften geeignet ist.

4. Verfahren nach Anspruch 1, dadurch gekennzeichnet, daß die aus Oxyden bestehende Flüssigkeit aus basischem Gestein gebildet wird, welches in einem Industrieofen geschmolzen wird und so ausgewählt ist, daß die Viskosität der Flüssigkeit kleiner als 2 Pa · s ist und daß ihre Zusammensetzung zum Erreichen hydraulischer Eigenschaften geeignet ist.

5. Einrichtung zur Ausübung des Verfahrens nach einem der Ansprüche 1 bis 4, mit

einem geschlossenen vertikalen und zylindrischkonischen Gehäuse (4, 5), das eine Strahlstichöffnung der aus einem Behalter (1) herrührenden Flüssigkeit aufweist, welche aus einer Abstichrinne oder einer Gießpfanne gespeist wird, wobei der untere Teil (5) des Gehäuses als trichterförmige Vertiefung geformt ist, die eine Austrittsöffnung für das pulverförmige Erzeugnis darstellt,

Zerteilungsmitteln des Flüssigkeitsstrahls in Tröpfchen, die wenigstens einen Gasinjektor umfassen, der gegen die Achse des in das Gehäuse (4, 5) durch eine Stichöffnung eintretenden Flüssigkeitsstrahls gerichtet ist,

Mitteln (3 ; 18, 19) zur raschen Abschreckung der Tröpfchen durch Einführung eines kalten Fluid in das Gehäuse (4, 5), dadurch gekennzeichnet,

daß die Stichöffnung in den oberen Teil des Gehäuses (4, 5) für das Giessen der Flüssigkeit als vertikaler Strahl ausgebildet ist, und

daß die Zerteilungsmittel einen ersten um den Flüssigkeitsstrahl angebrachten Hohlring (2), der als Zerteilungsleitung ausgebildet ist, mit unter Druck stehendem Gas gespeist wird und mit mehreren Öffnungen durchlöchert ist, welche um den Flüssigkeitsstrahl gleichmäßig verteilte Injektoren bilden und sämtlich schräg von oben nach unten auf ein gleiches Punkt der Achse des Flüssigkeitsstrahls gerichtet sind, damit letzterer in Tröpfchen zerteilt wird, umfassen.

6. Einrichtung nach Anspruch 5, dadurch gekennzeichnet, daß das Gehäuse (4, 5) außerdem in seinem oberen Drittel wenigstens eine Öffnung (7, 14) zur Entnahme des mit Staub beladenen Gases zu einem Zyklon-Staubabscheider (9, 17) aufweist, dessen Basis (11, 20) mit dem Gehäuse (4, 5) über eine Rückführungsleitung (12, 21) für den in dem Zyklon-Staubabscheider (9, 17) gesammelten Staub in Verbindung steht und der mit einer Rückführungsöffnung (13, 22) in die Basis des zylindrischen Teils (4) des Gehäuses mündet, und daß wenigstens einer der Zyklon-Staubabscheider (9, 17) außerdem über eine Leitung (10 ; 18-1) mit einem Zweit-Staubabscheider in Verbindung steht, der selbst in das Freie zum Abzug des Staub-entladenen Gases mündet.

7. Einrichtung nach einem der Ansprüche 5 und 6, bei welcher die Abschreckflüssigkeit der Tröpfchen in das Gehäuse (4, 5) injiziertes Wasser ist, dadurch gekennzeichnet, daß die Abschreckmittel einen zweiten Hohlring (3) umfassen, der als Zerteilungsleitung ausgebildet ist, im Abstand unterhalb des ersten Gas-Zerteilungsrings (2) angeordnet ist und den durch den ersten Ring gebildeten Tröpfchenstrahl einschließt.

8. Einrichtung nach einem der Ansprüche 5 und 6, bei der die Abschreckflüssigkeit der Tröpfchen ein in das Gehäuse (4, 5) eingeleitetes Gas ist, dadurch gekennzeichnet, daß die Abschreckmittel Mittel (14, 16, 19) zur Entnahme in dem Gehäuse (4, 5) und zum Staub-Entladen einer bestimmten Zerteilungs-Gasmenge sowie Mittel (18, 19) zum Zurückführen der Staub-entladenen Gasmenge durch erneute Injektion dieser Menge in die Basis des zylindrischen Teils (4) des Gehäuse umfassen.

9. Einrichtung nach den Ansprüchen 6 und 8, dadurch gekennzeichnet, daß die Mittel zur Entnahme und zum Staub-Entladen mehrere Absaugöffnungen (14) zum Absaugen des Staubbeladenen Zerteilungsgases umfassen, von denen jede einen Entstaubungs-Zyklon (17) über einen Wärmeaustauscher (16) speist, und daß die Rückführungmittel wenigstens eine Rückführungsleitung (18-4) aufweisen, welche die Basis des zylindrischen Teils (4) des Gehäuses mit einem Entstaubungs-Zyklon (17-4) verbindet, der mit keinem Zweit-Staubabscheider in Verbindung steht, um das in diesem Entstaubungs-Zyklon (17-4) Staubentladene Gas in das Gehäuse (4, 5) zurückzuführen.

10. Einrichtung nach den Ansprüchen 5 bis 9, dadurch gekennzeichnet, daß sie so gesteuert wird, daß das pulverförmige Erzeugnis durch einen Entnahmedurchgang mittels eines Tauch-Extraktionsapparats (6) bei einer Temperatur über 100° C entnommen wird.

# Fig 1

**Fig 2**

**Fig 3**